# EUROPEAN PATENT SPECIFICATION

(11) **EP 1 170 470 B1**
(45) Date of publication and mention of the grant of the patent: **06.10.2004**
(21) Application number: 01124785.5
(22) Date of filing: 24.11.1995
(51) Int. Cl.: F01M 1/08, F02F 1/20

(54) **Internal combustion engine**
Brennkraftmaschine
Moteur à combustion interne

(30) Priority: 24.11.1994 JP 28977294
(43) Date of publication of application: 09.01.2002
(62) Divisional of application: 95118563.6
(73) Proprietor: YAMAHA HATSUDOKI KABUSHIKI KAISHA, Iwata-shi Shizuoka-ken (JP)
(72) Inventor: Miyazawa, Kazuo, Iwata-shi, Shizuoka-ken (JP)
(74) Representative: Grünecker, Kinkeldey, Stockmair & Schwanhäusser Anwaltssozietät

(56) References cited:
- WO-A-82/03575
- US-A- 2 905 512
- US-A- 4 079 720
- US-A- 4 311 525
- US-A- 4 612 260
- PATENT ABSTRACTS OF JAPAN vol. 1999, no. 14, 22 December 1999 (1999-12-22) & JP 11 257491 A (ISUZU MOTORS LTD), 21 September 1999 (1999-09-21)
- PATENT ABSTRACTS OF JAPAN vol. 1998, no. 13, 30 November 1998 (1998-11-30) & JP 10 204678 A (TEIKOKU PISTON RING CO LTD), 4 August 1998 (1998-08-04)
- PATENT ABSTRACTS OF JAPAN vol. 018, no. 127 (M-1569), 2 March 1994 (1994-03-02) & JP 05 312269 A (RIKEN CORP), 22 November 1993 (1993-11-22)
- PATENT ABSTRACTS OF JAPAN vol. 018, no. 104 (M-1563), 21 February 1994 (1994-02-21) & JP 05 302674 A (RIKEN CORP), 16 November 1993 (1993-11-16)
- PATENT ABSTRACTS OF JAPAN vol. 012, no. 098 (M-680), 31 March 1988 (1988-03-31) & JP 62 233458 A (RIKEN CORP), 13 October 1987 (1987-10-13)

## Description

This invention relates to an internal combustion engine, in particular diesel engine, comprising a cylinder block and a cylinder head assembly, said cylinder block and said cylinder head assembly defining at least one cylinder, a lubricating system for delivering lubrication oil to spots of the engine, which need lubrication, a piston slidably disposed in said cylinder so as to reciprocate therein, said piston supporting said at least one piston ring disposed in a piston ring groove in sliding contact to an inner circumferential surface of a cylinder bore of the cylinder.

In two-cycle diesel engines, for example, lubricating oil is supplied to the middle of the air intake system where it is mixed with fuel before being supplied to the engine, or, it may be directly injected into the areas requiring lubrication such as the side surfaces of the pistons, the crank journals, etc. In either instance, the lubricating oil becomes mixed with fuel and air and is burned with them, but the exhaust gases would contain unburned lubricating oil, and particulate matter primarily composed of this unburned lubricating oil and fuel is removed as exhaust smoke. An effective way of reducing this exhaust smoke is to reduce the proportion (mixture ratio) of the lubricating oil with the fuel. In addition, lubricating oil improvements that reduce smoke have been proposed as well.

However, the lower the mixture ratio, the susceptible prone the engine to seizing and similar problems, hence there are limits to lowering the mixture ratio. In particular, because of the high carbon (soot) content in the combustion gases of two-cycle diesel engines, when the combustion temperature is high, carbon can be deposited in the area between the piston and the ring groove, which easily leads to ring sticking, etc.

Accordingly, it is an objective of the present invention to provide an improved internal combustion engine as indicated in the preamble portion of claim 1, allowing to improve lubricity of the cylinder and piston surfaces, in particular to reduce the friction loss between the inside surface of the cylinder and/or piston ring, so that the engine performance is improved.

According to the present invention, said objective is performed by an internal combustion engine according to claim 1.

According to the above-mentioned plating layers around the circumferential surface of the cylinder bores and the outside surface of the piston rings reduce the friction between both surfaces and reduce the probability of piston ring sticking within the cylinder bore. Furthermore, the various problems caused by generated carbon during the combustion process are reduced as polyisobutene contained in the lubricating oil is easily burned and generates a low soot (carbon).

Thus, operational problems with the reed valves and the exhaust valves due to an adhesion of carbon deposit is inhibited as the lubricating oil of this invention is easily burned and generates little carbon, while the lubricating oil is supplied to the crankshaft bearings, sliding surfaces and the pistons and is then mixed in the crank chamber with the intake air and is then supplied to the inside of the combustion chamber in which it is easily burned with the fuel.

According to preferred embodiments, said piston comprises a piston pin hole, the inner surface thereof comprising a plating containing molybdenum disulfide. This is advantageous in that it increases lubricity between the piston pin hole and a piston pin.

According to a further preferred embodiment, the piston ring groove also comprises a molybdenum disulfide plating.

According to a further preferred embodiment, said piston ring groove is made of a nickel-resisting cast iron alloy.

According to a further preferred embodiment, at least end surfaces of piston ring grooves nearest to a crankshaft side having a surface hardening layer upon its end surface, while the piston rings being made of cast iron or stainless steel with said end surface of the piston ring groove and surfaces of the piston ring grooves nearest the crankshaft having a layer of synthetic resin upon them.

Accordingly, adhesions of carbon unto the piston ring are reduced so that piston ring sticking is prevented.

According to a further preferred embodiment, at least a top ring groove area being a nickel resist iron casting with the piston rings being made of a cast iron or stainless steel.

According to a further preferred embodiment, the lubrication system comprises a lubricating oil supply device having a lubrication oil consumption detection means, which is adapted to compute a time sampled estimate of the lubrication oil consumption at the areas requiring lubrication in response to engine operating conditions, and an adding means that adds up the computed time-sampled consumption, and comprising an oil supply control means that supplies lubricating oil to the spots to be lubricated or the intake air system when an amount of oil supplied previously reaches the computed amount of accumulative oil consumption and the oil lubrication system.

Therefore, the appropriate amount of lubricating oil is supplied to the areas requiring lubrication, thereby reducing the generation of white smoke and carbon build-up. Moreover, as a consequence of the optimized lubrication between the cylinder and piston/piston rings, friction between the cylinder and piston rings is reduced and piston ring deposits are lowered. Piston ring sticking caused by surplus amount of lubricating oil is also avoided.

Further preferred embodiments are laid down in the further subclaims.

Hereinafter the present invention is explained in greater detail by means of several embodiments thereof which are illustrated in the associated drawings, wherein:
Figure 1 is a cross-sectional front view of an internal combustion engine according to an embodiment,
Figure 2 is a cross-sectional side view of the engine according to figure 1,
Figure 3 is a cross-sectional top view along line III-III of the engine of figure 1,
Figure 4 is a cross-sectional top view along line IV-IV of the engine of figure 1,
Figure 5 is a cross-sectional side view of a piston of the engine of figure 1,
Figure 6 is an enlarged cross-sectional side view of the piston ring area of the engine of figure 1,
Figure 7 is a schematic cross-sectional side view including an overall structural diagram of the lubricating oil supply device of the engine of figure 1,
Figure 8 is a cross-sectional side view of a second embodiment of the piston of the engine of figure 1, and
Figure 9 is an enlarged cross-sectional side view of a second embodiment of the piston ring area of the engine of figure 1.

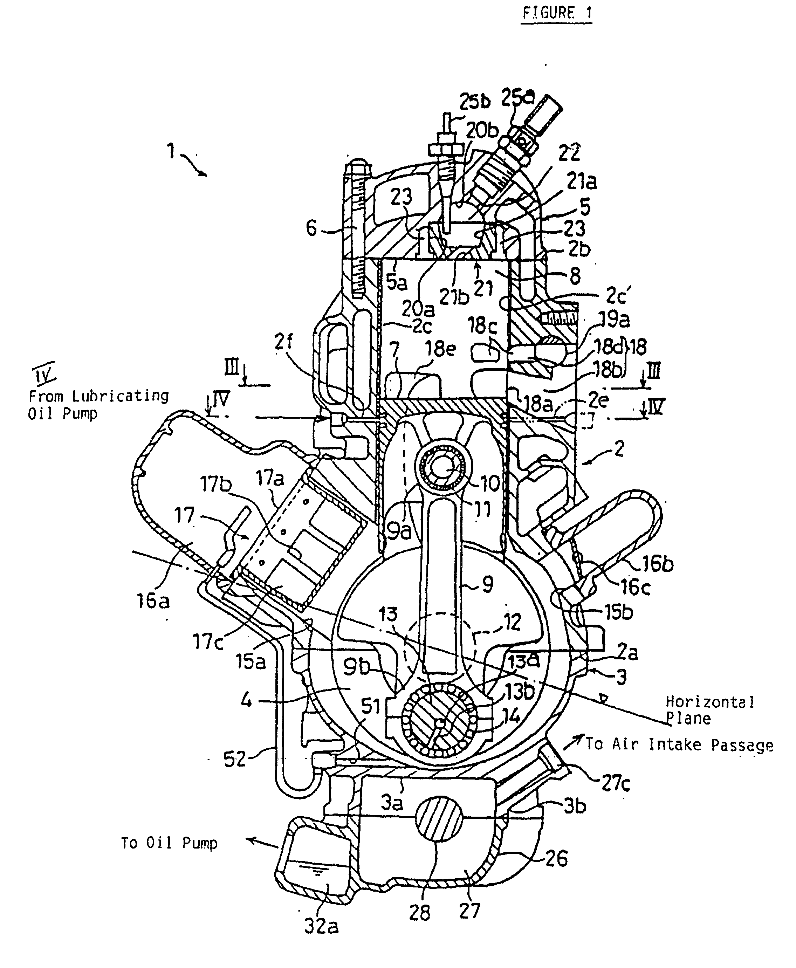

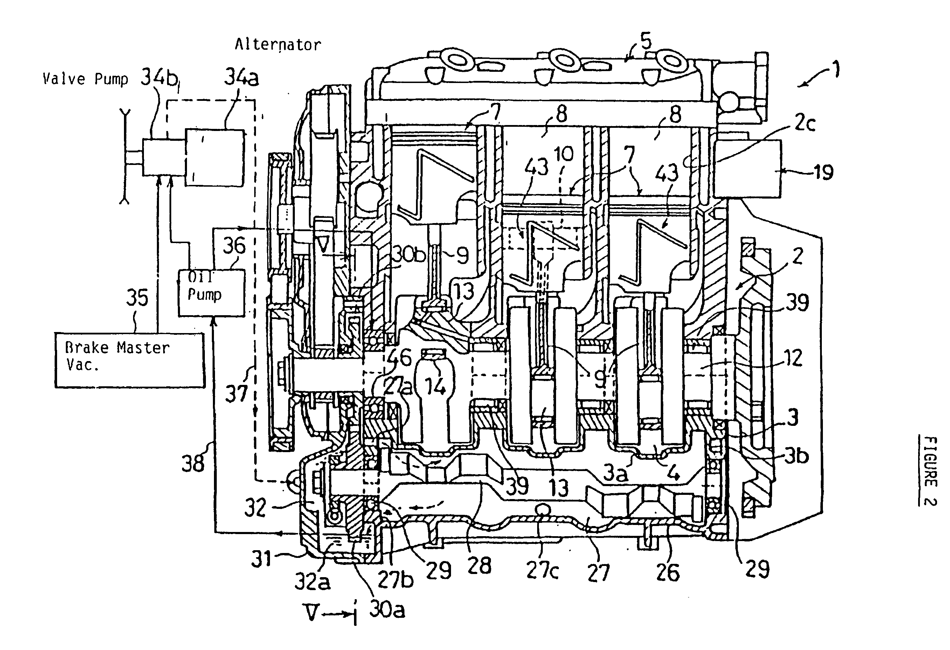

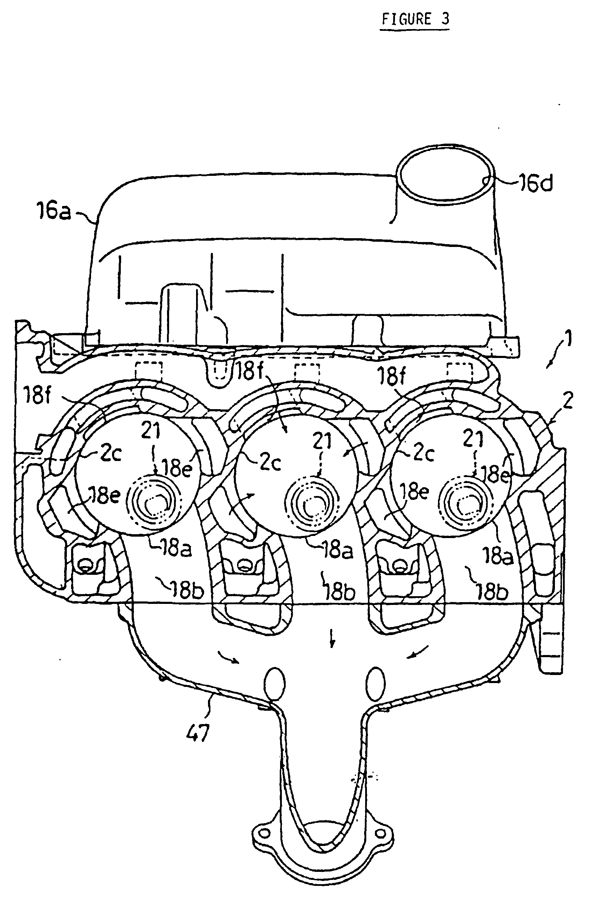

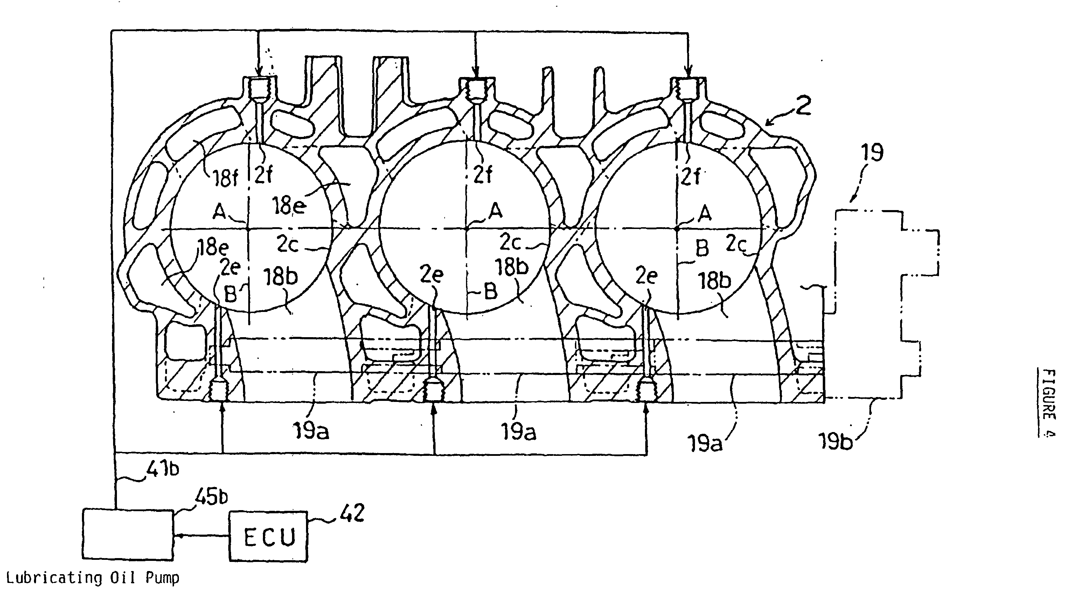

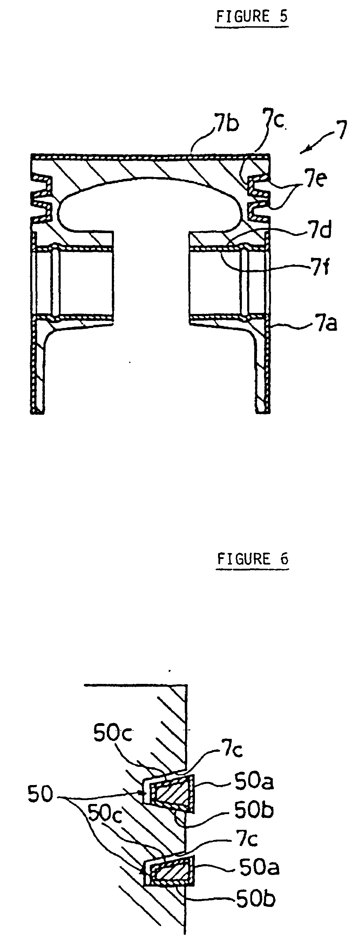

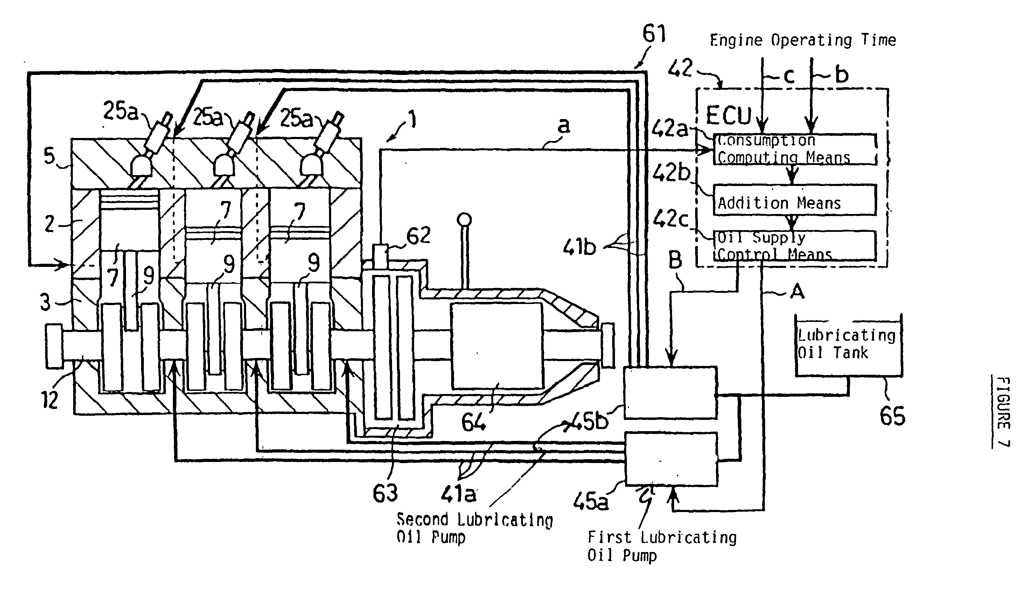

Figures 1 through 7 will be used to explain a first example (first embodiment) in a two-cycle diesel engine. Figure 1 is a sectional front view of said engine embodiment; Figure 2 is a sectional side view; Figures 3 and 4 are sectional views of Figure 1 along lines III-III and IV-IV, respectively; Figure 5 is a sectional side view of a piston; Figure 6 is an enlarged sectional view of the piston ring area; and Figure 7 is a structural diagram of the lubricating oil supply device.

In the Figures, 1 represents a water cooled, in-line, three-cylinder, two-cycle diesel engine. The crankcase 3 is attached to the bottom mating surface 2a of the cylinder block 2, and three sets of crank chambers 4 are formed for the three cylinders between the bottom of the cylinder block 2 and the crankcase 3. The cylinder head 5 is mounted to the top mating surface 2b of the foregoing cylinder block 2 and it is held tightly in place by a plurality of head bolts 6.

Three cylinder bores 2c are present in a row in the foregoing cylinder block 2, and pistons 7 have been slidably inserted into each of said cylinder bores 2c. The primary combustion chambers 8 are formed in the space bounded by the top surfaces of the pistons 7, the mating surface 5a of the foregoing cylinder head 5, the foregoing cylinder bores 2c, and the bottom surfaces of the below described hot plugs 21. The small ends 9a of the connecting rods 9 connect to the foregoing pistons 7 by means of piston pins 10 and needle bearings 11. The large ends 9b of said connecting rods 9 are linked to the crank pins 13 of the crankshaft 12 by needle bearings 14.

The foregoing crankshaft 12 is axially supported by ball bearings 46 and roller bearings 39. The roller bearings 39 which axially support the foregoing crankshaft 12 between the cylinders are directly supplied with lubricating oil by a first lubricating oil pump 45a that will be described below and which uses centrifugal force to supply the oil through the oil introduction passage 13a and the branch passages 13b.

Three sets of air intake openings 15a that pass into each of the foregoing crank chambers are present in the bottom of the foregoing cylinder block 2. Each of said air intake openings 15a is connected to an air intake manifold 16a which is common to all cylinders. In addition, each of the crank chambers 4 and the foregoing air intake manifold comprises oil holes 51 opening into the bottom of each crank chamber at a boss 52. This structure returns oil that builds up inside the crank chambers 4 to the air intake manifold.

Reed valves 17 are installed in each of the foregoing air intake openings 15a. These reed valves 17 are designed so that a valve plate 17c opens and closes over an opening 17b in the valve body 17. With the ascent of the foregoing piston 7, the negative pressure created in a crank chamber 4 causes the reed valve 17 to automatically open to introduce air into the crank chamber 4, and with the descent of the piston, the positive pressure closes the valve to prevent blow-back.

Also present in the foregoing cylinder block 2, on the side opposite from the foregoing air intake openings 15a, are scavenging air adjustment openings 15b which pass into each of the crank chambers. Said scavenging adjustment openings 15b are connected to a common scavenging chamber 16b, and scavenging control valves are located in the openings at the connection with said scavenging chamber. When said scavenging control valve 16c opens, said connection opening connects the crank chamber 4 to the scavenging chamber 16b to effectively increase the volume of the crank chamber and decrease the scavenging pressure, thereby increasing the internal EGR gas and lowering the combustion temperature. Then, when the foregoing scavenging valve 16c is closed, the crank chamber returns to its normal volume to increase the primary compression pressure to achieve adequate scavenging.

Additionally, a pair of exhaust ports 18 is formed for each cylinder in the top of the foregoing cylinder block 2. These exhaust ports 18 are composed of the main exhaust ports 18b which, from the external opening connection at the cylinder for the main exhaust openings 18a, and from a pair of auxiliary exhaust openings 18c located above the foregoing main exhaust openings 18a, lead to the outside; the foregoing main exhaust ports 18b merge with the auxiliary exhaust ports in the middle of the exhaust ports 18.

The opening and closing of the foregoing auxiliary exhaust ports 18d is controlled by an exhaust control device 19. This exhaust control device 19 varies the exhaust timing and the compression ratio and is located across the auxiliary exhaust portsl8d of the foregoing cylinder block 2. It consists of three exhaust valves 19a that open and close the foregoing three auxiliary exhaust ports 18d, and of a drive mechanism 19b which drives said exhaust valves 19a open and closed, and these are all linked together by respective linking members. The above mentioned drive mechanism links a drive rod with the outside ends of the foregoing exhaust valves 19a, and said drive shaft is connected to a drive motor by means of a gear set.

A pair of main scavenging openings 18e are present on both ends of the foregoing main exhaust openings 18a in the above cylinder block 2 and opposite scavenging openings 18f are positioned opposite these main exhaust openings 18a. These various scavenging openings 18e, 18f communicate with the crank chamber 4 of each of said cylinders by scavenging ports.

Oil holes 2e, 2f, namely one pair per cylinder, providing lubricating oil to the sliding surfaces of the piston are also present in the foregoing cylinder block 2. Both of said oil holes 2e, 2f pass through the cylinder block 2 at right angles to the crankshaft, and when viewing in the direction of the cylindrical axis A (see Figure 4), they are offset in the direction of the crankshaft on either side of the cylindrical axis A. Also, when viewing from the crankshaft direction (see Figure 1), they are positioned between the piston rings when the pistons are at their lower dead points. Each of these oil holes 2e, 2f is connected to a lubricating oil pump 45b by means of an oil supply passage 41.

Further, a box-shaped projecting boss 3b is present around the perimeter of the bottom wall 3a of the foregoing crankcase 3 and opens downward. The attachment of a box-shaped balancer cover 26 to the top of the opening by said boss 3b forms the balancer chamber 27. A balancer shaft 28 is mounted inside this balancer chamber 27 parallel to the crankshaft 12, and both ends are axially supported between the mating surfaces of the foregoing boss member 3b and the balancer cover 26 by bearings 29.

One end of the foregoing balancer shaft 28 protrudes outside the above mentioned balancer chamber 27, and a gear 30a attached to said protruding end and gear 30b drives the balancer shaft 28 into rotation at the same speed but in the opposite direction as the foregoing crankshaft 12. These gears 30a, 30b are located in a gear chamber 32 which is enclosed by a gear cover 36 that covers end surfaces of the foregoing cylinder block 2, the crankcase 3 and the balancer cover 26. Through holes 27a, 27b in the top and bottom of said gear chamber 32 pass into the foregoing balancer chamber 27.

Auxiliary combustion chambers 22 are present in the mating surface 5a of the foregoing cylinder head 5. These auxiliary combustion chambers 22 are composed of the concave area 21a of the hot plug inserted into the plug retention holes 20 of the cylinder head and of the concave area 20b in the cylinder head 5. Connecting holes 21b link said auxiliary combustion chambers 22 to the primary combustion chambers 8. Bolts 23 hold the foregoing hot plugs 21 in place and also pass through the top surface of the cylinder head, being secured by nuts. In addition, 25a is a fuel injection valve and 25b a glow plug.

Diesel engines such as in this embodiment lack throttle valves, hence there is inadequate intake negative pressure for the brake master vac. 35. Therefore, a negative pressure-generating vane pump (vacuum pump) 34b is mounted coaxially with the alternator 34a that is driven by the crankshaft. Said vane pump 34b is supplied with lubricating oil by separate lubricating oil pumps 45a, 45b.

Accordingly, in the present embodiment, a mixture is created from the air drawn in through the brake master back 35 and the foregoing lubricating oil. In the present embodiment, the foregoing balancer chamber 27 also functions as a breather chamber which separates the lubricating oil from the foregoing mixture. Thus, the outlet of the vane pump 34 is connected to the foregoing gear chamber 32 by the mixture passage 37, and an oil collection area in said gear chamber 32 is linked by a return oil passage 38 to the foregoing oil pump 36.

The mixture delivered from the foregoing vane pump 34b initially loses most of its oil inside the gear chamber 32, the mixture with the remaining oil passing through the top passage hole 27a into the balancer chamber 27, where more oil separates and is returned through the lower passage hole 27b to the oil collection area in the gear chamber 32. The air from which the foregoing lubricating oil was separated may then either be passed from the air exhaust opening 27c through a breather hose not shown in the Figures into the air intake manifold 16a, or be expelled into the atmosphere.

In the engine of the present embodiment, the following configurations have been employed to prevent seizing between the cylinder and piston, and to prevent sticking, etc., of the piston rings:

The foregoing cylinder block 2 is an aluminum alloy casting, while a layer of chrome plating 2c' is present on the inside surface of the foregoing cylinder bores 2c.

The foregoing pistons 7 are either aluminum alloy castings or aluminum alloy forgings, and a layer 7a of Sn plating is present on the external circumferential surface of the skirt area of said pistons. A layer 7b of nickel plating is formed on the crown surface. The ring grooves 7c and the piston pin holes 7d of said pistons have their inner surfaces coated with Kashima Coat layers 7e, 7f (a hard marmite treatment layer containing molybdenum disulfide). An oil groove 43 is also present in the outside circumference of the foregoing piston 7, and lubricating oil supplied to this oil groove 43 from the foregoing oil holes 2e, 2f diffuses across the external surface of the piston.

The piston rings 50 fitted into the ring grooves 7c of the foregoing pistons 7 are made of spherical graphite iron castings with a layer 50a of chrome plating on their outside circumferential surface. The end surfaces on the crankshaft side (lower end surfaces) are fitted with a resin coating layer 50b, and the inside circumferential surface and the top end surface on the combustion chamber side are coated with a phosphate salt film 50c.

In the present embodiment, the lubricating oil supply device 61 is mounted on the engine 1 as shown in Figure 7. This lubricating oil supply device 61 is composed of a first lubricating oil supply pump 45a which provides lubricating oil to the journal areas of the foregoing crankshaft 12, of a second lubricating oil supply pump 45b which provides lubricating oil to the sliding surfaces in the foregoing cylinders, and an ECU 42 which controls the operation of both pumps 45a, 45b. 62 is an engine RPM detection sensor that detects the rotational speed of the crankshaft 12, 63 is the clutch, 64 is the transmission, and 65 is a lubricating oil tank.

The foregoing first and second lubricating oil pumps 45a, 45b are driven by stepping motors, for example, independently from the rotational drive of the engine; they are capable of altering the amount of oil output or the timing interval between each oil output cycle.

The foregoing ECU 42 functions as a consumption computation means, 42a, an integration means 42b, and an oil supply control means 42c.

The foregoing consumption computation means computes estimates of the lubricating oil volume (the unit required volume) *p* required per revolution of the engine by the foregoing crank journals and the lubricating oil requirement *q* (the unit requirement) for the sliding surface of the pistons based upon the operating condition of the engine, as determined on the basis of the engine RPM signal *a* from the above mentioned engine RPM detection sensor 62, from the load signal *b* and the engine operating time accumulation signal *c*. The above mentioned load signal *b* may be based upon detection of the amount of fuel injected from the fuel injection valve 25a, or by the magnitude of accelerator depression.

The foregoing accumulation means 42b accumulates the sum of the unit requirements *p*, *q* that were computed time-sampled as described above to determine the total lubricating oil requirements *P, Q* . Then, the foregoing first and second lubricating oil pumps 45a, 45b are driven by the stepping-motor drive signals *A*, *B* that are emitted until the per-cycle output volumes *P', Q'* are reached.

Furthermore, in the present embodiment, the foregoing lubricating oil contains polyisobutene which is easily burned while generating only little soot (carbon). The composition of this lubricating oil is 20% by wt of polyisobutene, 60% by wt of mineral oil, 15% by wt of diluent (kerosene), and 5% by wt of additives. It is possible to use lubricating oils which are commercially available for two-cycle gasolene engines.

Next, the operational effects of the present embodiment will be explained.

In the engine 1 of the present embodiment, the lubricating oil requirement map is searched based upon the lubricating oil requirements *p*, *q* for each rotation of the engine 1 to accumulate the time-sampled-by-moment lubricating oil requirements. The output *P'*, *Q'* for each revolution of the pump is then continued until said sum of the required amount *P, Q* is reached, thereby assuring that the appropriate amount of lubricating oil is supplied to the area to be lubricated without allowing inadequacies in lubrication, and thereby enabling the lubricating oil consumption and the generation of white smoke to be reduced.

In the present embodiment, the composition of the lubricating oil was 20% by wt of polyisobutene, 60% by wt of mineral oil, 15% by wt of diluent (kerosene), and 5% by wt of additives, and this type of oil is generally commercially available for the lubrication of two-cycle gasolene engine; it is easily burned and generates little soot (carbon), thereby enabling the reduction of carbon deposits in the exhaust system, the prevention of piston ring sticking, and the improvement of the cleanliness of the pistons.

In addition, a Sn plating layer 7a is present on the crown and the skirt circumferential surfaces of the piston 7, while a layer of Ni plating 7b is present on the crown surface, and Kashima Coat layer 50b is formed on the ring groove 7c and the piston pin hole 7d, thereby avoiding increased friction resistance between the piston and cylinder, aluminum deposits on the piston rings, and discoloration or wear around the small end of the connecting rods.

Table 1 shows the results of experiments that were performed to confirm the above described effects of the design of this invention. In these experiments, the specifications used for the structure of the cylinders, pistons, and piston rings are shown in the specifications column of Table 1, while the effectiveness in improving the carbon accumulation situation in the exhaust system and preventing piston ring sticking are also shown. The evaluations were made from a comparison of the various specifications for the pistons, rings, etc., and are shown in terms of "O" representing improvement, "Λ" representing no great change, and "X" representing worsening.

| No. | Specification | Carbon accumulation in the exhaust | Piston ring sticking | Piston cleansing properties | Piston ring deposits | Trouble on small end of con. rods |
|---|---|---|---|---|---|---|
| 1 | Kashima Coat on piston ring groove | Λ | X | X | O | Λ |
| 2 | Kashima Coat on piston pin holes | Λ | Λ | Λ | Λ | O |
| 3 | Niresist cast iron piston ring groove | Λ | O | Λ | O | Λ |
| 4 | Deflink Coat on the outside of the piston | Λ | X | X | Λ | Λ |
| 5 | Nickel plating on piston crown | Λ | O | Λ | Λ | Λ |
| 6 | Resin coating on lower surface of piston ring | Λ | O | Λ | O | Λ |
| 7 | No. 1 + 2 + 4 + 5 + 6 | O | O | O | O | O |
| 8 | No. 2 + 3 + 6 | O | O | O | O | O |
| 9 | No. 2 + 3 + 4 + 5 + 6 | O | O | O | O | O |
| 7' | No. 1 + 2 + 4 + 5 + 6 | O | O | O | O | O |

The foregoing specifications were used in the experiments:

The cylinders were aluminum alloy castings with a Cr plating on the inside bore surface; all the cylinders were the same as in the foregoing embodiment

The pistons were-aluminum alloy forgings with an Sn plating layer around the external circumferential skirt surface, while the crown surface, ring groove and piston pin holes were left as is, in contrast to the foregoing embodiment.

The piston ring was made of spherical graphite iron, and the outer circumferential surface was Cr coated, but other external surfaces comprise phosphate salt films. The lower surface underwent a different treatment than in the above embodiment.

The lubricating oil was the same used in the foregoing embodiment, consisting of 20% by wt of polyisobutene, 60% by wt of mineral oil, 15% by wt of diluent (kerosene), and 5% by wt of additives.

The cylinders, pistons, and piston rings with the foregoing specifications were used as controls against the specifications cited in Table 1. Each specification 1 - 6 was implemented singly to evaluate its role in any improvement, lack of improvement, or worsening compared with the basic specifications.

For No. 7, in addition to using the above described 2-cycle gasolene engine lubricating oil that is commercially available, as is shown in Figures 5 and 6, a combination of specifications 1, 2 and 4-6 were used, and all the items being evaluated showed improvement over the basic specification.

Also, for No. 8, where the piston ring groove area was made from niresist cast iron (specification No. 3), all the evaluation items also showed improvements.

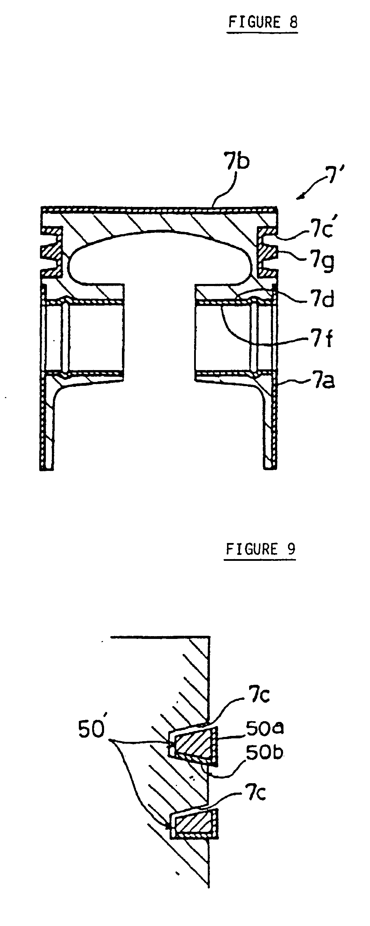

Figures 8 and 9 show modifications of the piston and piston ring compared with the foregoing first embodiment, and in the Figures, reference numbers are identical to the corresponding ones used in Figures 5 and 6.

The piston 7' shown in Figure 8 comprises a ring groove of niresist cast-iron.

The niresist cast iron ring shaped member 7g which forms the ring groove 7c' in the piston 7' is cast during the piston casting process. The crown surface, piston pin hole and, outside skirt surface of this piston 7' were coated with layers 7b, 7f and 7a as in Figure 5.

The modified example of piston 7' was used with the piston ring 50 of the foregoing first embodiment and is shown as No. 9 in Table 1 above. As is clear from the table, improvements occurred in all the basic areas of evaluation.

Row 7' in Table 1 shows the evaluation when the piston ring 50' shown in the aforementioned Figure 9 was used with piston 7. Improvements took place in all areas of evaluation.

The above described embodiment was described using a two-cycle diesel engine, but the teaching may also be applied to four-cycle diesel engines to obtain the effects similar to the ones described above.

As described above, the lubricating oil used contains 20 to 80% by wt polyisobutene, which is easily burned and generates but little soot, and in addition, the inside surface of the cylinder bore and the outside surface of the piston rings were plated with Ni or Cr in order to reduce resistance from friction between the cylinder and the piston/piston rings.

In addition to using the lubricating oil containing polyisobutene, a surface hardening layer is formed on at least the end of the piston ring nearest the crankshaft, and additionally a resin layer is formed on the end surface of the piston ring nearest the crankshaft in order to reduce adhesions on the piston rings in addition to the foregoing reduction of generation of soot.

Furthermore, in addition to using the lubricating oil containing polyisobutene, at least the top ring groove of the piston is fitted with a niresist iron casting, which also reduces the adhesions of the piston rings.

In addition to the structures described in the two foregoing paragraphs, an Ni or Cr plating is applied to the inside circumferential surface of the cylinder bore and to the outside circumferential surface of the piston rings, thereby reducing adhesions to the piston rings, and reducing the resistance from friction between the cylinder and the piston/piston rings.

The aforementioned surface hardening layers in this embodiment use an alumite treatment to be described later (Kashima Coat) and said treatment layer may also include molybdenum disulfide, carbon, etc. In addition, the above described resin surface treatment is a coating of fluorene type resin.

In addition, cast spherical graphite iron is the optimal material for the piston rings n this embodiment, and in cases when the outside circumferential surface of the rings has been plated, an electro plating of Ni or Cr is employed; for stainless steel rings, these would be formed by ion plating methods (such as the physical vapor deposition method).

Moreover, the time-sampled consumption of lubricating oil is added and integrated, and, at the time when said integral reaches the previously amount of oil delivered by the lubricating oil supply, the next quantity of lubricating oil is delivered, thereby making possible the feeding of an appropriate quantity of lubricating oil without shortages to the areas to be lubricated and decreasing the generation of white smoke caused by superfluous lubricating oil, carbon build up, piston ring sticking, etc., effectively preventing inadequate amounts of lubricating oil from causing increased friction between the cylinder and piston rings, and from deposits being formed on the piston rings.

As described above, by being equipped with reed type check valves located in the air intake passage leading to the crank chambers, and exhaust control valves to vary the exhaust timing, air drawn into the crank chamber undergoing primary compression and then being introduced into the combustion chamber through a scavenging passage.

When the structures described in the above paragraphs are applied to a pressurized crank chamber of two-cycle diesel engine equipped with reed valves and exhaust control valves, not only can piston ring sticking, increased friction between the pistons and cylinders, and piston ring deposits be reduced, but operational impairments of the reed valves and exhaust control valves may also be effectively prevented.

## Claims

1. Internal combustion engine, in particular diesel engine, comprising a cylinder block and a cylinder head assembly, said cylinder block and said cylinder head assembly defining at least one cylinder, a lubrication system for delivering lubrication oil to spots of the engine, which need lubrication, a piston slidably disposed in said cylinder so as to reciprocate therein, said piston supporting at least one piston ring disposed in a piston ring groove in sliding contact to an inner circumferential surface of a cylinder bore of the cylinder, wherein said inner circumferential surface of the cylinder bore is plated with a layer of Ni or Cr, an outside circumferential surface of the piston ring is plated with a layer of Ni or Cr, the piston and/or the piston ring, at least partially, comprises a molybdenum disulfide plating and the lubricating oil comprises polyisobutene and wherein at least one reed valve is provided located in the at least one air intake passage leading to the at least one crank chamber and at least one exhaust control valve is provided to vary the exhaust timing when air that has been drawn into the crank chamber undergoes primary compression and is then introduced into a combustion chamber by means of a scavenging passage.

2. Internal combustion engine according to claim 1, **characterized in that** the piston ring groove comprises a molybdenum disulfide plating.

3. Internal combustion engine according to claim 1, **characterized in that** the piston ring groove is made of a nickel-resisting cast iron alloy.

4. Internal combustion engine according to at least one of the preceding claims 1 to 3, **characterized in that** at least end surfaces of piston ring grooves nearest to a crankshaft side having a surface hardening layer upon its own surface, while the piston rings being made of cast iron or stainless steel with said end surfaces of the piston ring groove and surfaces of the piston ring grooves nearest the crankshaft having a layer of synthetic resin upon them.

5. Internal combustion engine according to at least one of the preceding claims 1 to 4, **characterized in that** at least a top ring groove area being a nickel-resist iron casting with the piston rings being made of cast iron or stainless steel.

6. Internal combustion engine according to at least one of the preceding claims 1 to 5, **characterized in that** the piston is made of an aluminium alloy casting.

7. Internal combustion engine according to claim 6, **characterized in that** said piston comprising a piston pin hole the inner surface thereof comprising a plating containing molybdenum disulfide.

8. Internal combustion engine according to at least one of the preceding claims 1 to 7, **characterized in that** the cylinder is made of aluminium alloy castings.

9. Internal combustion engine according to at least one of the preceding claims 1 to 8, **characterized in that** the lubricating oil contains polyisobutene and is supplied to an air intake system of the engine.

10. Internal combustion engine according to at least one of the preceding claims 1 to 9, **characterized in that** the lubrication system comprises a lubricating oil supply device having a lubrication oil consumption detection means, which is adapted to compute a time-sampled estimate of the lubrication oil consumption at the areas requiring lubrication in response to engine operating conditions, and an adding means that adds up the computed time-sampled consumption, and comprising an oil supply control means that supplies lubricating oil to the spots to be lubricated or the intake air system when an amount of oil supplied previously reaches the computed amount of cumulative oil consumption in the oil lubrication system.

## Patentansprüche

1. Brennkraftmaschine, insbesondere Dieselmotor, mit einem Zylinderblock und einer Zylinderkopfanordnung, wobei der Zylinderblock und die Zylinderkopfanordnung zumindest einen Zylinder bilden, einem Schmierungssystem zum Zuführen von Schmieröl zu Stellen des Motors, die Schmierung benötigen, einem Kolben, gleitbar in dem Zylinder angeordnet, um darin hin- und herzugehen, wobei der Kolben, zumindest einen Kolbenring trägt, angeordnet in einer Kolbenringnut in Gleitkontakt zu einer inneren Umfangsoberfläche einer Zylinderbohrung des Zylinders, wobei die innere Umfangsoberfläche der Zylinderbohrung mit einer Schicht von Ni oder Cr plattiert ist, eine äußere Umfangsoberfläche des Kolbenrings mit einer Schicht von Ni oder Cr plattiert ist, der Kolben und / oder der Kolbenring, zumindest teilweise, ein Molybdändisulfid- Plattierung aufweisen und das Schmieröl Polyisobuten ist, und wobei zumindest ein Reed- Ventil vorgesehen ist, angeordnet in zumindest einem Lufteinlasskanal, der zu zumindest einer Kurbelkammer führt und zumindest ein Auslasssteuerventil vorgesehen ist, um den Auslasszeitpunkt zu verändern, wenn die Luft, die in die Kurbelkammer hinein angesaugt worden ist, einer Primär- Kompression unterzogen wird und dann in eine Brennkammer mittels eines Spülkanales eingeleitet wird.

2. Brennkraftmaschine nach Anspruch 1, **dadurch gekennzeichnet, dass** die Kolbenringnut ein Molybdändisulfid- Plattierung aufweist.

3. Brennkraftmaschine nach Anspruch 1, **dadurch gekennzeichnet, dass** die Kolbenringnut aus einer nickelbeständigen Gusseisenlegierung hergestellt ist.

4. Brennkraftmaschine nach zumindest einem der vorhergehenden Ansprüche 1 bis 3, **dadurch gekennzeichnet, dass** zumindest die Endoberflächen der Kolbenringnuten nächst zu einer Seite der Kurbelwelle eine oberflächengehärtete Schicht auf ihrer eigenen Oberfläche haben, während die Kolbenringe, die aus Gusseisen oder rostfreiem Stahl hergestellt sind, wobei diesen Endoberflächen der Kolbenringnut und die Oberflächen der Kolbenringnuten, die der Kurbelwelle am nächsten sind, eine Schicht aus Kunststoff aufweisen.

5. Brennkraftmaschine nach zumindest einem der vorhergehenden Ansprüche 1 bis 4, **dadurch gekennzeichnet, dass** zumindest einer oberer Ringnutbereich eine nickelbeständige Gusseisenlegierung ist, mit den Kolbenringen aus Gusseisen oder rostfreiem Stahl.

6. Brennkraftmaschine nach zumindest einem der vorhergehenden Ansprüche 1 bis 5, **dadurch gekennzeichnet, dass** der Kolben aus einem Aluminiumlegierungsgussteil hergestellt ist.

7. Brennkraftmaschine nach Anspruch 6, **dadurch gekennzeichnet, dass** der Kolben eine Kolbenbolzenbohrung aufweist, deren Innenoberfläche mit einer Plattierung, Molybdändisulfid aufweisenden Plattierung versehen ist.

8. Brennkraftmaschine nach zumindest einem der vorhergehenden Ansprüche 1 bis 7, **dadurch gekennzeichnet, dass** der Zylinder aus Aluminiumlegierungsgussteilen hergestellt ist.

9. Brennkraftmaschine nach zumindest einem der vorhergehenden Ansprüche 1 bis 8, **dadurch gekennzeichnet, dass** das Schmieröl Polyisobuten enthält und in ein Lufteinlasssystem des Motors zugeführt wird.

10. Brennkraftmaschine nach zumindest einem der vorhergehenden Ansprüche 1 bis 9, **dadurch gekennzeichnet, dass** das Schmiersystem eine Schmieröl- Zuführungsvorrichtung aufweist, die eine Schmierölverbrauch- Erfassungseinrichtung hat, die vorgesehen ist, eine zeit- abgefragte Abschätzung des Schmierölverbrauchs an den Flächen berechnet, die eine Schmierung in Abhängigkeit von dem Motorbetriebszuständen erfordern, und eine Zusatzeinrichtung, die den berechneten zeit- abgefragten Verbrauch aufsummiert, und die eine Ölzuführungs-Steuereinrichtung aufweist, die Schmieröl an die zu schmierenden Stellen oder das Einlassluftsystem zuführt, wenn eine vorher zugeführte Ölmenge die berechnete Menge von des Gesamt- Ölverbrauches in dem Ölschmiersystem erreicht.

## Revendications

1. Moteur à combustion interne, en particulier moteur diesel, comprenant un bloc -cylindres et un ensemble de tête de cylindre, ledit bloc -cylindres et ledit ensemble de tête de cylindre définissant au moins un cylindre, un système de lubrif ication destiné à amener de l'huile de lubrification à des emplacements du moteur qui nécessitent une lubrification, un piston disposé de manière coulissante dans ledit cylindre de manière à y effectuer un va -et-vient, ledit piston supportant au moins un s egment de piston disposé dans une rainure annulaire du piston en contact coulissant avec une surface circonférentielle interne d'un alésage de cylindre du cylindre, dans lequel ladite surface circonférentielle interne de l'alésage de cylindre est revêtue d'une couche de Ni ou de Cr, une surface circonférentielle extérieure du segment de piston est revêtue d'une couche de Ni ou de Cr, le piston et/ou le segment de pist on, au moins en partie, comprennent un revêtement de bisulfure de molybdène et l'huile de lubrification comprend du polyisobutène et dans lequel au moins une soupape d'injection d'air secondaire pulsé est prévue en étant placée dans l'un des passages d'admission d'air menant à l'un des carters de moteur, et au moins une soupape de commande d'éch appement est prévue pour faire varier la synchronisation d'échappement lorsque l'air qui a été attiré à l'intérieur du carter de moteur subit une compression primaire et est ensuite introduit à l'intérieur d'une chambre dé combustion au moyen d'un passage de balayage.

2. Moteur à combustion interne selon la revendication 1, **caractérisé en ce que** la rainure annulaire du piston comprend un revêtement de bisulfure de molybdène.

3. Moteur à combustion interne selon la revendication 1, **caractérisé en ce que** la rainure annulaire du piston est fabriquée en alliage de fonte résistant au nickel.

4. Moteur à combustion interne selon au moins l'une des revendications précédentes 1 à 3, **caractérisé en ce qu'**au moins les surfaces d'extrémité des rainures annulaires du piston les plus proches d'un côté du vilebrequin présentent une couche de trempe superficielle sur leur propre surface, tandis que les segments de piston sont fabriqués en fonte ou en acier inoxydable, lesdites surfaces d'extrémité de la rainure annulaire du piston et les surfaces des rainures annulaires du piston les plus proches du vilebrequin présentent sur elles une couche de résine synthétique.

5. Moteur à combustion interne selon au moins l'une des revendications précédentes 1 à 4, **caractérisé en ce qu'**au moins une zone de rainure annulaire supérieure est une pièce de fonte rés istant au nickel, les segments de piston étant fabriqués en fer de fonte ou en acier inoxydable.

6. Moteur à combustion interne selon au moins l'une des revendications précédentes 1 à 5, **caractérisé en ce que** le piston est fabriqué en coulée d'alliage d'aluminium.

7. Moteur à combustion interne selon la revendication 6, **caractérisé en ce que** ledit piston comprend un trou d'axe de piston dont la surface interne comprend un revê tement contenant du bisulfure de molybdène.

8. Moteur à combustion interne selon au moins l'une des revendications précédentes 1 à 7, **caractérisé en ce que** le cylindre est fabriqué en coulées d'alliage d'aluminium.

9. Moteur à combustion interne selon au moins l'une des revendications précédentes 1 à 8, **caractérisé en ce que** l'huile de lubrification contient du polyisobutène et est amenée à un système d'admission d'air du moteur.

10. Moteur à combustion interne selon au moins l'une des revendications précédentes 1 à 9, **caractérisé en ce que** le système de lubrification comprend un dispositif d'alimentation en huile de lubrification présentant des moyens de détection de la consommation d'huile de lubrification, qui est adapté pour calculer une estimation éc hantillonnée dans le temps de la consommation d'huile de lubrification au niveau des zones nécessitant une lubrification, en réponse aux conditions de marche du moteur, et des moyens d'addition qui additionnent la consommation calculée échantillonnée dans le temps, et comprenant des moyens de commande de l'alimentation en huile qui amènent l'huile de lubrification aux emplacements à lubrifier ou au système d'admission d'air lorsqu'une quantité d'huile amenée précédemment atteint la quantité calculée de cons ommation d'huile cumulative dans le système de lubrification d'huile.
